# EUROPÄISCHE PATENTSCHRIFT

(11) **EP 3 919 305 B1**
(45) Veröffentlichungstag und Bekanntmachung des Hinweises auf die Patenterteilung: **09.07.2025**
(21) Anmeldenummer: 21161814.5
(22) Anmeldetag: 10.03.2021
(51) Int. Cl.: B60K 17/04, B60K 11/04, B60K 17/10

(54) **LANDWIRTSCHAFTLICHE ARBEITSMASCHINE**
AGRICULTURAL MACHINE
MACHINE DE TRAVAIL AGRICOLE

(30) Priorität: 03.06.2020 DE 102020114692
(43) Veröffentlichungstag der Anmeldung: 08.12.2021
(73) Patentinhaber: CLAAS Industrietechnik GmbH, 33106 Paderborn (DE)
(72) Erfinder: Schulte, Michael, 33129 Delbrück (DE); Schopf, Helmut, 33129 Delbrück (DE); Hartmann, Felix, 34414 Warburg (DE); Lütkeschümer, Malte, 49080 Osnabrück (DE); Tiemann, Robert, 32139 Spenge (DE)
(74) Vertreter: CLAAS Gruppe

(56) Entgegenhaltungen:
- EP-A2- 1 329 354
- US-A- 3 727 712
- US-A1- 2007 093 352
- US-A1- 2008 085 802

## Beschreibung

Die vorliegende Erfindung betrifft eine landwirtschaftliche Arbeitsmaschine gemäß dem Oberbegriff von Anspruch 1.

Die Arbeitsmaschine ist in Form eines Traktors ausgebildet und umfasst einen Fahrzeugrahmen sowie einen Antriebsstrang, der einen Antriebsmotor sowie eine Getriebeeinrichtung aufweist. Der Antriebsmotor umfasst ein Motorgehäuse sowie eine Abtriebswelle. Die Getriebeeinrichtung umfasst ein Pumpenverteilergetriebe sowie ein stufenloses Getriebe.

Zum gattungsgemäßen Stand der Technik wird auf die deutsche Offenlegungsschrift DE 100 47 398 A1 hingewiesen, die eine Getriebeeinrichtung umfasst. Diese ist modular ausgebildet und umfasst ein stufenloses Getriebemodul sowie ein konstantes Getriebemodul. Mittels des modularen Aufbaus des in der genannten Schrift beschriebenen Getriebebaukastens ist es ohne Weiteres möglich, das stufenlose Getriebemodul über einen Flansch wahlweise mit verschiedenen konstanten Getriebemodulen unterschiedlicher Leistungsklassen und/oder unterschiedlicher Schaltstufe zu kombinieren. Auf diese Weise kann der Getriebebaukasten für verschiedenste Arbeitsmaschinen verwendet werden.

Weiterhin ist aus der US 2007/093352 A eine landwirtschaftliche Arbeitsmaschine gemäß dem Oberbegriff von Anspruch 1 bekannt.

In der Praxis hat es sich betreffend die Verwendung möglichst flexibel einsetzbarer Getriebeeinrichtungen als problematisch herausgestellt, dass diese einen vergleichsweise großen Bauraumbedarf aufweisen. Dies ist insoweit problematisch, als sowohl der Antriebsmotor der Arbeitsmaschine als auch die jeweilige Getriebeeinrichtung als solche an dem Fahrzeugrahmen der Arbeitsmaschine gelagert werden müssen.

Der vorliegenden Erfindung liegt mithin die Aufgabe zu Grunde, eine landwirtschaftliche Arbeitsmaschine bereitzustellen, die trotz Verwendung einer mehrstufigen Getriebeeinrichtung auf platzsparende Weise ausgeführt ist.

Die zugrunde liegende Aufgabe wird erfindungsgemäß mittels der Arbeitsmaschine mit den Merkmalen des Anspruchs 1 gelöst. Vorteilhafte Ausgestaltungen ergeben sich aus den zugehörigen Unteransprüchen.

Die erfindungsgemäße landwirtschaftliche Arbeitsmaschine ist dadurch gekennzeichnet, dass das Pumpenverteilergetriebe derart an den Antriebsmotor angeflanscht ist, dass der Antriebsmotor zumindest teilweise mittels des Pumpenverteilergetriebes an dem Fahrzeugrahmen abgestützt ist. Hierbei weist das Pumpenverteilergetriebe abtriebsseitig mindestens eine Ausgangswelle zur Wirkverbindung mit dem stufenlosen Getriebe und mindestens einen Anschluss für eine hydraulische Antriebsvorrichtung auf. Das "Anflanschen" des Pumpenverteilergetriebes an den Antriebsmotor kann insbesondere mittels einer Schraubverbindung erfolgen, wobei miteinander korrespondierende Flansche des Antriebsmotors und des Pumpenverteilergetriebes unter Verwendung einer Mehrzahl von Schraubbolzen in Kraft übertragender Weise miteinander verbunden sind. Das Pumpenverteilergetriebe kann abtriebsseitig eine Mehrzahl von Anschlüssen für hydraulische Antriebsvorrichtungen aufweisen, wobei insbesondere der Anschluss hydraulischer Pumpen denkbar ist, mittels derer jeweils ein Arbeitsfluid unter Druck setzbar und auf diese Weise ein jeweiliges hydraulisches Arbeitsorgan antreibbar ist.

Die erfindungsgemäße Arbeitsmaschine hat viele Vorteile. Insbesondere weist sie eine im Vergleich zum Stand der Technik besonders kurze Bauweise auf, da eine Lagerung des Antriebsmotors an den Fahrzeugrahmen teilweise über das Pumpenverteilergetriebe erfolgt und mithin die Anordnung entsprechender Lagerstellen zur Lagerung des Antriebsmotors an den Fahrzeugrahmen nicht mehr an dem Antriebsmotor selbst, sondern an dem Pumpenverteilergetriebe angeordnet werden können. Hierbei kann das Motorgehäuse des Antriebsmotors kleiner ausgeführt sein als im Stand der Technik, da es im Vergleich hierzu nicht in sich abgeschlossen sein muss, sondern infolge des Anflanschens des Pumpenverteilergetriebes gewissermaßen unmittelbar in ein Gehäuse des letzteren übergehen kann. Die Verbindung des Pumpenverteilergetriebes mit dem Motorgehäuse mittels Anflanschens, insbesondere mittels einer Schraubverbindung, trägt ferner zu einer besseren Integrationsfähigkeit des Pumpenverteilergetriebes in den Antriebsstrang bei. So kann der Antriebsmotor sich im Wesentlichen oberhalb eines Fahrzeugrahmens der Arbeitsmaschine erstreckend angeordnet sein, während das stufenlose Getriebe im Wesentlichen zwischen dem Fahrzeugrahmen positioniert ist.

In einer besonders bevorzugten Ausgestaltung der Arbeitsmaschine ist die Getriebeeinrichtung modular aufgebaut, wobei vorzugsweise das Pumpenverteilergetriebe ein Zwischengetriebemodul bildet, das zwischen dem Antriebsmotor und dem stufenlosen Getriebe angeordnet ist. Hierdurch kann besonders einfach ein Getriebebaukasten gebildet werden, der verschiedene Pumpenverteilergetriebe und verschiedene stufenlose Getriebe umfasst. Diese können beispielsweise für verschiedene Leistungsstufen, mit verschiedenen Übersetzungen, mit verschiedenen Anzahlen von Anschlüssen für hydraulische Antriebsvorrichtungen etc. ausgebildet sein, sodass mittels eines modularen Zusammenstellens eines jeweiligen Pumpenverteilergetriebes mit einem jeweiligen stufenlosen Getriebe, besonders einfach Getriebeeinrichtungen für verschiedene Anwendungsfälle bereitgestellt werden können. Hierdurch kann die Anzahl von verschiedenen Getriebetypen, derer es beispielsweise für die Darstellung unterschiedlicher Leistungsbereiche bedarf, reduziert werden, wobei durch die Reduzierung des Getriebebaukastens der Bauraumbedarf für die gesamte Antriebsstrangstruktur verringert werden kann. Die Getriebeeinrichtung ist entsprechend an unterschiedliche Leistungsklassen von Antriebsmotoren und/oder stufenlosen Getrieben anpassbar.

Aufgrund der Verwendung des Pumpenverteilergetriebes ist zudem die Installation hydraulischer Arbeitsorgane besonders einfach möglich, beispielsweise auch in Form von Nachrüstlösungen oder Umrüstlösungen, bei denen unter Verwendung des mindestens einen Anschlusses des Pumpenverteilergetriebes eine jeweilige hydraulische Antriebsvorrichtung gegen eine andere hydraulische Antriebsvorrichtung getauscht werden kann.

In einer vorteilhaften Ausgestaltung der Arbeitsmaschine ist das Pumpenverteilergetriebe mit einem separaten Gehäuse zwischen dem Antriebsmotor und dem stufenlosen Getriebe angeordnet. Hierbei stehen vorzugsweise eine Eingangswelle des Pumpenverteilergetriebes mit der Abtriebswelle des Antriebsmotors und eine Ausgangswelle des Umverteilungsgetriebes mit einer Eingangswelle des stufenlosen Getriebes in Wirkverbindung. Dieser Ausgestaltung der Getriebeeinrichtung ermöglicht besonders einfach die Abdeckung eines großen Leistungsbereichs, da mittels des Pumpenverteilergetriebes eine Übersetzung von der Abtriebswelle des Antriebsmotors auf die Eingangswelle des stufenlosen Getriebes vorgenommen werden kann. Insbesondere kann das stufenlose Getriebe mit einer erhöhten Drehzahl angesprochen und auf diese Weise die Ausgangsleistung der Getriebeeinrichtung vergrößert werden, ohne dass das stufenlose Getriebe ein erhöhtes Drehmoment verarbeiten muss.

Sofern die Getriebeeinrichtung in der vorstehend beschriebenen Weise ausgeführt ist, kann es weiterhin vorteilhaft sein, wenn die Eingangswelle des Pumpenverteilergetriebes und die Abtriebswelle des Antriebsmotors und/oder die Ausgangswelle des Pumpenverteilergetriebes und die Eingangswelle des stufenlosen Getriebes koaxial angeordnet sind. Hierbei kann es von Vorteil sein, wenn die Eingangswelle des Pumpenverteilergetriebes und die Ausgangswelle des Pumpenverteilergetriebes vertikal versetzt angeordnet sind. Auf diese Weise kann ein etwaiger aus einer vertikal versetzten Anordnung von Antriebsmotor und stufenlosem Getriebe resultierender vertikale Versatz zwischen der Abtriebswelle des Antriebsmotors und der Eingangswelle des stufenlosen Getriebes zumindest teilweise ausgeglichen werden. Denkbar ist auch eine Blockbauweise, bei welcher das Gehäuse des Pumpenverteilergetriebes mit dem Motorgehäuse des Antriebsmotors und dem Getriebegehäuse des stufenlosen Getriebes verbunden ist.

Die erfindungsgemäße landwirtschaftliche Arbeitsmaschine weiter ausgestaltend umfasst das Pumpenverteilergetriebe ein Kühlsystem. Dieses dient dazu, das Pumpenverteilergetriebe zu kühlen, wobei vorteilhafterweise das Kühlsystem unmittelbar an dem Pumpenverteilergetriebe integriert ist, das heißt insbesondere innerhalb des Gehäuses des Pumpenverteilergetriebes angeordnet sein kann. Vorteilhafterweise umfasst das Gehäuse des Pumpenverteilergetriebes einen Fluidraum zur Aufnahme eines Betriebsfluids, mittels dessen unter anderem überschüssige Wärmeenergie, die infolge des Betriebs in dem Pumpenverteilergetriebe anfällt, aufgenommen werden kann. Bei dem Betriebsfluid kann es sich insbesondere um ein Schmieröl handeln, dass in dem Fluidraum vorliegt und nach dem Prinzip einer Sumpf-Schmierung mit Zahnradelementen des Pumpenverteilergetriebes in Kontakt steht. Entsprechend ist es vorteilhaft, wenn der Fluidraum in einem unteren Bereich des Gehäuses des Pumpenverteilergetriebes angeordnet ist. Das Betriebsfluid kann vorzugsweise mit mindestens einem Wärmetauscher des Kühlsystems in Kontakt stehen, sodass ein Übergang von Wärmeenergie von dem Betriebsfluid auf den Wärmetauscher bzw. ein darin geführtes Kühlfluid möglich ist.

In einer bevorzugten Ausgestaltung wirkt das Kühlsystem des Pumpenverteilergetriebes mit einem Kühlsystem des Antriebsmotors zusammen, wobei insbesondere ein Kühlfluid des Antriebsmotors zu dem Kühlsystem des Pumpenverteilergetriebes zirkuliert wird, um dort die in dem Betriebsfluid vorliegende, überschüssige Wärmeenergie aufzunehmen und abzuführen. Zu diesem Zweck können die Kühlsysteme des Pumpenverteilergetriebes und des Antriebsmotors strömungstechnisch miteinander verbunden sein. Auf diese Weise ist eine Zirkulation des jeweiligen Kühlfluids mittels einer einzigen Pumpeinrichtung betreibbar. Ferner ist eine zentrale Wärmeabfuhr, beispielsweise mittels eines Radiators des Antriebsmotors, möglich.

Vorteilhafterweise ist das Kühlsystem in Form eines Kühlmoduls ausgebildet, das als Ganzes an dem Gehäuse des Pumpenverteilergetriebes angeordnet werden kann. Der modulare Aufbau erlaubt es, in der Herstellung verschieden ausgebildeter Pumpenverteilergetriebe, die jeweils als Zwischengetriebemodule ausgebildet sind, wahlweise an dem jeweiligen Gehäuse ein Kühlmodul anzuordnen oder nicht. Hierdurch kann besonders einfach in Abhängigkeit eines Verwendungsszenarios des Pumpenverteilergetriebes darauf reagiert werden, ob überschüssige Abwärme, die intern in dem Pumpenverteilergetriebe anfällt, mittels eines Kühlsystems werden muss oder nicht. Letzteres kann insbesondere bei besonders leistungsstarken Arbeitsmaschinen der Fall sein, bei denen das Pumpenverteilergetriebe große Leistungen übertragen muss.

Zwecks Kraft übertragender Verbindung des Pumpenverteilergetriebes mit dem Antriebsmotor umfassen in einer bevorzugten Ausgestaltung der erfindungsgemäße Arbeitsmaschine das Gehäuse des Pumpenverteilergetriebes sowie das Motorgehäuse des Antriebsmotors miteinander korrespondierende Ringflansche, mittels derer das Pumpenverteilergetriebe an den Antriebsmotor angeflanscht ist. Die Ringflansche können insbesondere in sich geschlossen ausgeführt sein, sodass eine Kraftübertragung zwischen dem Antriebsmotor und dem Pumpenverteilergetriebe besonders einfach mittels einer Mehrzahl von Verbindungsmitteln über die Ringflansche verteilt erfolgen kann, sodass eine Einleitung von Lagerkräften des Antriebsmotors in das Gehäuse des Pumpenverteilergetriebes nur an wenigen Stellen verbunden mit dadurch bedingten Spannungsspitzen in dem Gehäuse des Pumpenverteilergetriebes vermieden werden kann.

Wie vorstehend bereits dargelegt ist, kann es besonders vorteilhaft sein, wenn das Pumpenverteilergetriebe zwischen seiner Eingangswelle und seiner Ausgangswelle eine Übersetzungsstufe aufweist. Auf diese Weise kann ein Leistungsspektrum der Getriebeeinrichtung infolge der Anordnung des Pumpenverteilergetriebes in Reihe mit dem stufenlosen Getriebe stark vergrößert werden. Insbesondere kann mittels des Pumpenverteilergetriebes eine Übersetzung ins Langsame, d.h. mit einem Übersetzungsverhältnis von i < 1, vorgenommen werden. Dies hat den besonderen Vorteil, dass dem dem Pumpenverteilergetriebe nachgeschalteten stufenlosen Getriebe eine höhere Leistung zugeführt werden kann, ohne dass hierbei ein höheres Drehmoments auftritt. Letzteres würde eine größere Dimensionierung des stufenlosen Getriebes erforderlich machen, was entsprechend vermieden werden kann. Mittels der zusätzlichen Übersetzungsstufe in Form des Pumpenverteilergetriebes kann mithin eine größere Leistung an einer Ausgangswelle des stufenlosen Getriebes zur Verfügung gestellt werden während das stufenlose Getriebe vergleichsweise klein dimensioniert werden kann.

Ferner ist eine solche Ausgestaltung der erfindungsgemäßen Arbeitsmaschine von Vorteil, bei der die Eingangswelle des stufenlosen Getriebes mit dem Pumpenverteilergetriebe mittels einer Gelenkwelle verbunden ist. Hierdurch können besonders einfach die Ausgangswelle des Pumpenverteilergetriebes und die Eingangswelle des stufenlosen Getriebes vertikal versetzt zueinander angeordnet sein. Eine solche Anordnung trägt dazu bei, axialen Bauraum für die Gelenkwelle einzusparen. Insbesondere ist der teilweise Ausgleich des vertikalen Versatzes zwischen der Abtriebswelle des Antriebsmotors und der Eingangswelle des stufenlosen Getriebes durch das Pumpenverteilergetriebe vorteilhaft, um den Beugewinkel der Gelenkwelle gering zu halten, wodurch ein größtmöglicher Wirkungsgrad bei der Drehmomentübertragung erreicht werden kann.

Die erfindungsgemäße Arbeitsmaschine weiter ausgestaltend umfasst das Pumpenverteilergetriebe mindestens zwei Anschlüsse, die jeweils zum Anschluss für eine hydraulische Antriebsvorrichtung geeignet sind. Hierbei wirken vorzugsweise ein erster Anschluss mit einer hydraulischen Antriebsvorrichtung in Form einer Arbeitshydraulikpumpe und ein zweiter Anschluss mit einer hydraulischen Antriebsvorrichtung in Form einer Lüfterpumpe zusammen. Die Arbeitshydraulikpumpe kann beispielsweise zum Betrieb einer Zapfwelle zum Anschluss einer externen Arbeitsmaschine verwendet werden.

Weiterhin kann eine solche Arbeitsmaschine besonders vorteilhaft sein, die mindestens einen Torsionsdämpfer aufweist, der zwischen dem Antriebsmotor und dem stufenlosen Getriebe angeordnet ist. Der Torsionsdämpfer kann als Schwingungsdämpfer hinter dem Antriebsmotor zum Einsatz kommen, wenn in dem Antriebsstrang keine Trenn- und Anfahrkupplung vorgesehen ist. Mit dem Einsatz des Torsionsdämpfers können sowohl Drehmomentspitzen des Antriebsmotors als auch Laufunruhen des Antriebsstrangs oder von gekoppelten Arbeitsgeräten ferngehalten werden. Insbesondere bei einer koaxialen Anordnung von Abtriebswelle des Antriebsmotors und Eingangswelle des Pumpenverteilergetriebes sind Torsionsschwingungen vernachlässigbar. Vorteilhafterweise ist der Torsionsdämpfer unmittelbar mit der Abtriebswelle des Antriebsmotor verbunden.

Einem weiteren Gedanken der Erfindung gemäß kann das Pumpenverteilergetriebe als Stirnradgetriebe ausgeführt sein. Stirnradgetriebe zeichnen sich durch eine einfache Bauweise und hohe Robustheit aus.

Dabei kann das Pumpenverteilergetriebe eine erste Zahnradstufe mit einem ersten auf seiner Eingangswelle angeordneten Zahnradelement umfassen, welches mit zumindest einem auf zumindest einer zu der Eingangswelle achsparallelen Welle angeordneten zweiten Zahnradelement kämmt. Mittels der ersten Zahnradstufe kann ein Übersetzungsverhältnis vorgegeben werden, welches an die Größenordnung der zu übertragenden Drehzahl und des zu übertragenden Drehmoments zwischen dem zum Einsatz kommenden Antriebsmotor sowie dem nachgeordneten stufenlosen Getriebe angepasst ist. Dadurch kann berücksichtigt werden, dass der Antriebsmotor ein höheres Drehmoment bereitstellen kann als das stufenlose Getriebe dauerhaft aufnehmen kann. Eine Schädigung des stufenlosen Getriebes kann somit vermieden werden.

Insbesondere kann die zumindest eine Welle eine Abtriebswelle des Pumpenverteilergetriebes bilden, an die eine hydraulische Antriebsvorrichtung anschließbar ist. Die hydraulische Antriebsvorrichtung kann insbesondere als Hydraulikpumpe ausgeführt sein. Die Hydraulikpumpe ist dadurch unabhängig vom stufenlosen Getriebe antreibbar. Die Antriebsdrehzahl der Hydraulikpumpe resultiert aus dem Übersetzungsverhältnis der ersten Zahnradstufe. Die zumindest eine Welle kann alternativ die Ausgangswelle des Pumpenverteilergetriebes bilden.

Gemäß einer bevorzugten Weiterbildung kann die erste Zahnradstufe ein drittes Zahnradelement aufweisen, welches mit dem ersten Zahnradelement kämmt. Das auf einer weiteren zur Eingangswelle achsparallelen Welle angeordnete dritte Zahnradelement kann dem Antrieb einer weiteren als hydraulische Antriebsvorrichtung dienen.

Weiterhin kann auf der zumindest einen Welle ein erstes Zahnradelement einer zweiten Zahnradstufe angeordnet sein, welches mit einem zweiten Zahnradelement der zweiten Zahnradstufe kämmt, das auf der Ausgangswelle des Pumpenverteilergetriebes angeordnet ist.

Vorteilhaft ist es, wenn der Torsionsdämpfer von einer Lagerung des ersten Zahnradelementes der ersten Zahnradstufe des Pumpenverteilergetriebes aufgenommen ist. Bevorzugt sind dabei die Abtriebswelle des Antriebsmotors und die Eingangswelle des Pumpenverteilergetriebes koaxial angeordnet.

Die Erfindung ist nachstehend anhand eines Ausführungsbeispiels, das in den Figuren dargestellt ist, näher erläutert. Es zeigt:
- Fig. 1:: Eine seitliche Ansicht eines erfindungsgemäßen landwirtschaftlichen Arbeitsmaschine in Form eines Traktors,
- Fig. 2:: Eine perspektivische Ansicht eines Antriebsmotors in Wirkverbindung mit einer Getriebeeinrichtung, gelagert an einen Fahrzeugrahmen,
- Fig. 3:: Eine schematische Darstellung eines Antriebsmotors in Wirkverbindung mit einer Getriebeeinrichtung,
- Fig. 4:: Eine schematische Darstellung eines Antriebsmotors in Wirkverbindung mit einer alternativen Getriebeeinrichtung,
- Fig. 5:: Eine perspektivische Darstellung eines Pumpenverteilergetriebes,
- Fig. 6:: Eine weitere perspektivische Darstellung des Pumpenverteilergetriebes gemäß Figur 5 und
- Fig. 7:: Ein Detail eines Kühlsystems des Pumpenverteilergetriebes gemäß Figur 5.

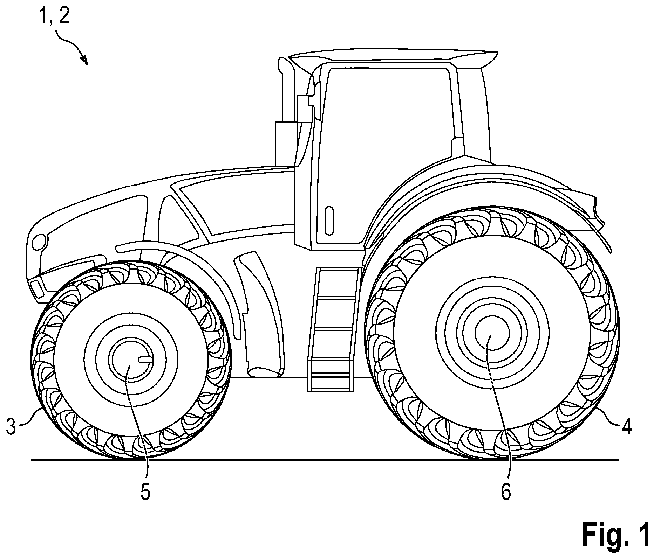

In **Figur 1** ist eine landwirtschaftliche Arbeitsmaschine **1** in Form eines Traktors **2** in schematischer Seitenansicht dargestellt. Es handelt sich bei dem Traktor **1** beispielsweise um einen Standardtraktor, der mit einem Antriebsmotor **8,** einem Fahrgetriebe und einem Fahrwerk ausgestattet ist. Von dem Fahrwerk sind in der Ansicht gemäß **Figur 1** jeweils ein Vorderrad **3** und ein Hinterrad **4** dargestellt. Die Vorderräder **3** sind jeweils an einer dazwischenliegenden Vorderachse **5** und die Hinterräder **4** sind jeweils an einer dazwischenliegenden Hinterachse **6** angebaut. Der Traktor **2** kann in dem vorliegenden Ausführungsbeispiel über die Hinterräder **4** antreibbar sein. Alternative Antriebsformen, wie Vorderachs- oder Allradantrieb sind ebenfalls denkbar. Zu diesem Zweck weist der Traktor **1** einen Antriebsstrang auf, der eine Getriebeeinrichtung **7** sowie einen Antriebsmotor **8** umfasst. Dabei ist mittels der Getriebeeinrichtung **7** eine Antriebsverbindung von dem in **Figur 1** nicht gezeigten Antriebsmotor **8** zumindest über die Hinterachse **6** zu den Hinterrädern **4** herstellbar.

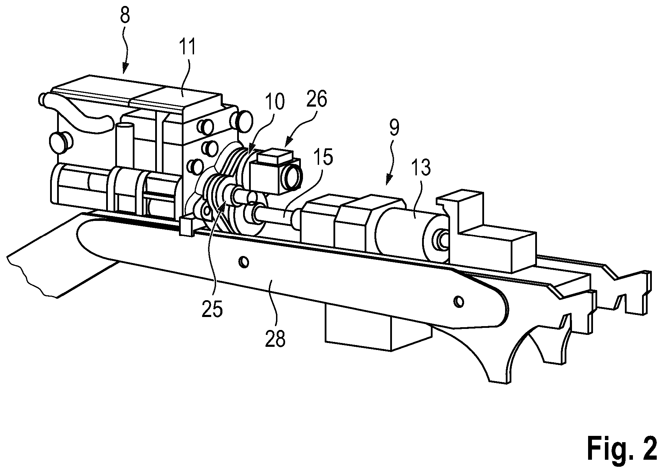

Anhand von **Figur 2** ist ersichtlich, in welcher Weise der Antriebsmotor **8** sowie die Getriebeeinrichtung **7** an einem Fahrzeugrahmen **28** der Antriebsmaschine **1** gelagert sind. Hierzu ist erfindungsgemäßes Pumpenverteilergetriebe **10** derart an den Antriebsmotor **8** angeflanscht, dass letzterer zumindest teilweise über das Pumpenverteilergetriebe **10** an dem Fahrzeugrahmen **28** abgestützt ist. Auf diese Weise baut die Kombination aus Antriebsmotor **8** und Pumpenverteilergetriebe **10** vergleichsweise kurz und ist mithin platzsparend ausgeführt. Zur Verbindung des Antriebsmotors **8** mit dem Pumpenverteilergetriebe **10** wirken beide Bauteile mittels miteinander korrespondierender Ringflansche **33** zusammen, wie nachstehend gesondert erläutert ist. Wie sich besonders gut anhand der Darstellung gemäß **Figur 2** ergibt, weist das Pumpenverteilergetriebe **10** abtriebsseitig eine Ausgangswelle **18** auf, mittels der das Pumpenverteilergetriebe **10 -** unter Zwischenschaltung einer Gelenkwelle **15** - mit dem stufenlosen Getriebe **9** zusammenwirkt. Ferner umfasst es vom Verteilergetriebe zwei Anschlüsse **29, 30** für hydraulische Antriebsvorrichtung in **25, 26.** In dem gezeigten Beispiel sind eine erste hydraulische Antriebsvorrichtung **25** von einer Lüfterpumpe und die zweite hydraulische Antriebsvorrichtung **26** von einer Arbeitshydraulikpumpe gebildet. Mithin ist das Pumpenverteilergetriebe **10** besonders gut dazu geeignet, eine mittels des Antriebsmotors **8** zur Verfügung gestellte Leistung auf verschiedene abtriebsseitige Verbraucher zu verteilen, mittels derer die Arbeitsmaschine **1** insgesamt betreibbar ist.

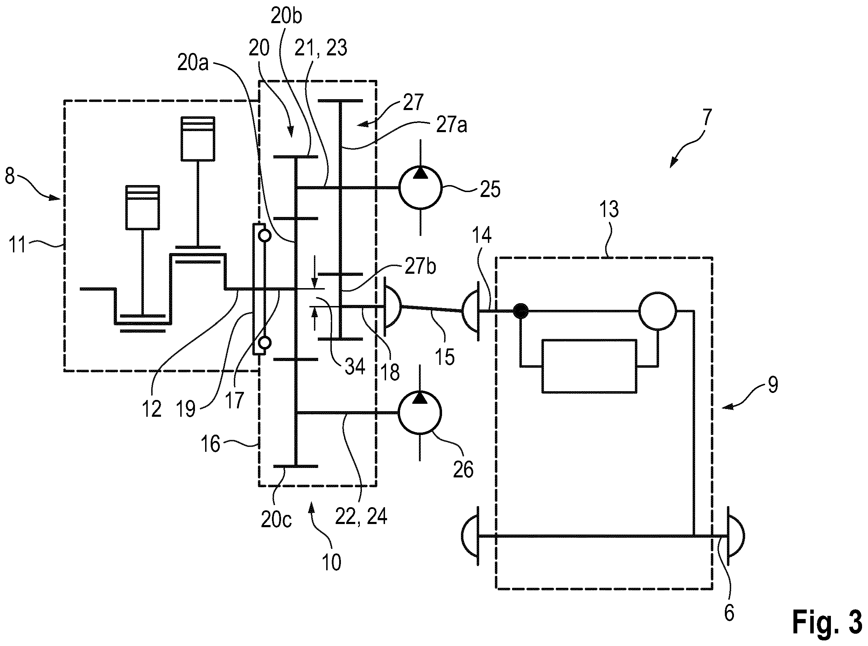

In **Figur 3** ist eine schematische Darstellung der Getriebeeinrichtung **7** der Arbeitsmaschine **1** gemäß einer ersten Ausführungsform gezeigt. Die Getriebeeinrichtung **7** wirkt hierbei mit dem Antriebsmotor **8** zusammen, der ein Motorgehäuse **11** sowie eine Abtriebswelle **12** aufweist. Der Antriebsmotor **8** ist im dargestellten Ausführungsbeispiel als ein Verbrennungsmotor ausgeführt. Die Abtriebswelle **12** ist als Kurbelwelle ausgebildet. Mit dem Motorgehäuse **11** ist ein separates Gehäuse **16** eines als Zwischengetriebemodul ausgebildeten Pumpenverteilergetriebes **10** verbunden. Dabei ist das Gehäuse **16** an dem Motorgehäuse **11** angeflanscht, sodass Lagerkräfte des Antriebsmotors **8** ausgehend von dessen Motorgehäuse **11** auf das Gehäuse **16** des Pumpenverteilergetriebes **10** übertragbar und auf diese Weise der Antriebsmotor **8** zumindest teilweise an einem Fahrzeugrahmen **28** der Arbeitsmaschine **1** abstützbar bzw. abgestützt ist. Das Pumpenverteilergetriebe **10** umfasst eine Eingangswelle **17,** die koaxial zur Abtriebswelle **12** des Antriebsmotors **8** angeordnet ist, sowie eine Ausgangswelle **18.** Die Ausgangswelle **18** des Pumpenverteilergetriebes **10** ist mit einer Eingangswelle **14** des als stufenloses Getriebe **9** ausgeführten Fahrgetriebes durch eine Gelenkwelle **15** verbunden. Das stufenlose Getriebe **9** ist in einem Getriebegehäuse **13** angeordnet. Die Getriebeeinrichtung **7** ist nach alldem modular aufgebaut, wobei das Pumpenverteilergetriebe **10** und das stufenlose Getriebe **9** modular austauschbar sind, sodass sich ein Getriebebaukasten ergibt, mittels dessen durch Austausch einzelner Module auf verschiedene Anforderungen reagieren und insbesondere weite Leistungsbereiche eines jeweiligen Traktors **2** abdecken kann.

Der Antriebsmotor **8** wirkt mit einem Torsionsdämpfer **19** zusammen, der zwischen den Antriebsmotor **8** und dem stufenlose Getriebe **9** integriert ist. Hierzu kann der Torsionsdämpfer **19** zwischen der Abtriebswelle **12** und der Eingangswelle **17** des Pumpenverteilergetriebes **10** angeordnet sein. Durch die koaxiale Anordnung von Abtriebswelle **12** und Eingangswelle **17** des Pumpenverteilergetriebes **10** sind Torsionsschwingungen vernachlässigbar.

Das Pumpenverteilergetriebe **10** ist als Stirnradgetriebe ausgeführt. Das Pumpenverteilergetriebe **10** umfasst im dargestellten Ausführungsbeispiel zwei Zahnradstufen, eine erste Zahnradstufe **20** und eine zweite Zahnradstufe **27.** Das Pumpenverteilergetriebe **10** kann auch mit nur einer Zahnradstufe **20** oder beispielsweise mit einer dritten Zahnradstufe ausgeführt sein. Der Torsionsdämpfer **19** kann von einer Lagerung eines Zahnradelementes **20a** einer ersten Zahnradstufe **20** des Pumpenverteilergetriebes **10** aufgenommen sein.

Auf der Eingangswelle **17** ist ein erstes Zahnradelement **20a** der ersten Zahnradstufe 20 angeordnet, welches mit einem zweiten Zahnradelement **20b** kämmt, das auf einer zur Eingangswelle **17** achsparallelen Welle **21** angeordnet ist. Weiterhin umfasst die erste Zahnradstufe **20** eine weitere achsparallele Welle **21,** auf welcher ein drittes Zahnradelement **20c** angeordnet ist, welches ebenfalls mit dem ersten Zahnradelement **20a** kämmt. Die jeweilige Welle **21, 22** bildet eine Abtriebswelle **23, 24** für als zwei Hydraulikpumpen ausgeführte hydraulische Antriebsvorrichtungen **25, 26.** Die Antriebsdrehzahl der jeweiligen hydraulischen Antriebsvorrichtung **25, 26** lässt sich durch das korrespondierende Übersetzungsverhältnis zwischen dem ersten Zahnradelement **20a** und dem zweiten Zahnradelement **20b** bzw. dem ersten Zahnradelement **20a** und dem dritten Zahnradelement **20c** vorgeben.

Die zweite Zahnradstufe **27** umfasst ein erstes Zahnradelement **27a,** welches auf der Welle **21** angeordnet ist. Das erste Zahnradelement **27a** kämmt mit einem zweiten Zahnradelement **27b,** welches auf der Ausgangswelle **18** des Pumpenverteilergetriebes **10** angeordnet ist.

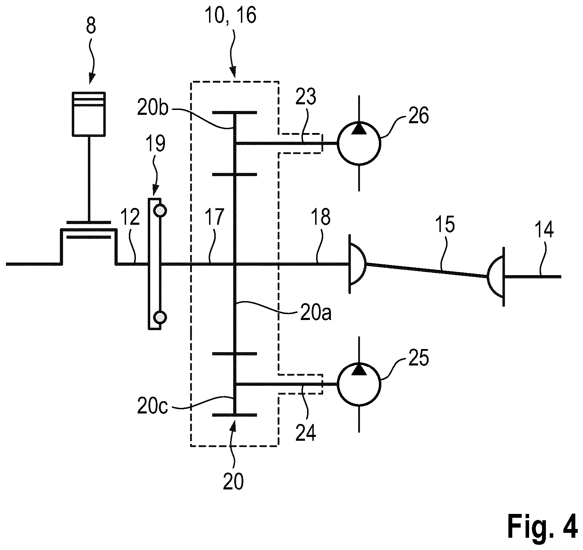

In einer alternativen Ausgestaltung des Pumpenverteilergetriebes **10** nimmt dieses keine Übersetzung zwischen seiner Eingangswelle **17** und seiner Ausgangswelle **18** vor. Dieser Ausgestaltung ist in **Figur 4** veranschaulicht. Da das Pumpverteilergetriebe **10** im Vergleich zu denjenigen gemäß **Figur 3** ohne eine zweite Zahnradstufe **27** auskommt, ist es vergleichsweise einfach konstruiert, kann jedoch folglich auch nicht dieselben Vorteile erzielen, die sich mittels der zweiten Zahnradstufe **27** realisieren lassen. Gleichwohl ist das Pumpenverteilergetriebe **10** gemäß **Figur 4** mittels seiner Zahnradstufe **20** dazu geeignet, neben einer Leistungsübertragung auf seiner Ausgangswelle **18** ferner über separate Abtriebswellen **23, 24** insgesamt zwei Anschlüsse **29, 30** zu versorgen, mittels derer jeweils eine hydraulische Antriebsvorrichtung **25, 26** über das Pumpenverteilergetriebe **10** versorgt werden. Die an der Abtriebswelle **18** des Pumpenverteilergetriebes **10** anliegende Leistung wird mittels einer Gelenkwelle **15** auf eine Eingangswelle **14** des in **Figur 4** nicht dargestellten stufenlosen Getriebes **9** übertragen.

Wie aus den schematischen Darstellungen in **Figur 3** **und** **4** ersichtlich ist, sind der Antriebsmotor **8** und das stufenlose Getriebe **9** mit einem vertikalen Versatz zueinander an einem Fahrzeugrahmen **28** der Arbeitsmaschine **1** angeordnet, sodass die Abtriebswelle **12** und die Eingangswelle **14** des stufenlosen Getriebes **9** ebenfalls einen vertikalen Versatz aufweisen. Das Pumpenverteilergetriebe **10** gemäß **Figur 3** bildet hier einen teilweisen Ausgleich dieses vertikalen Versatzes mittels eines Achsversatzes **34** zwischen seiner Eingangswelle **17** und seiner Ausgangswelle **18.** Hierdurch wird in vorteilhafter Weise ein Beugewinkel der Gelenkwelle **15** gering gehalten. Gemäß einer nicht dargestellten Ausführungsform kann vorgesehen sein, dass sowohl die Abtriebswelle **12** des Antriebsmotors **8** und die Eingangswelle **17** als auch die Ausgangswelle **18** des Pumpenverteilergetriebes **10** und die Eingangswelle **14** des stufenlosen Getriebes **9** koaxial angeordnet sind.

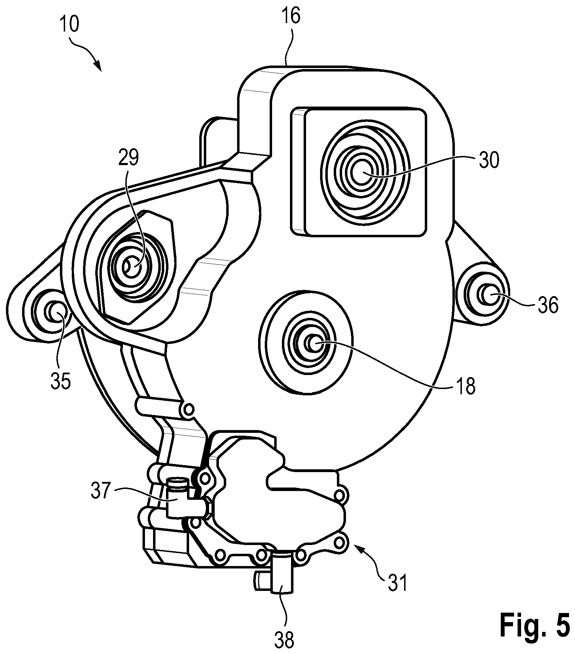

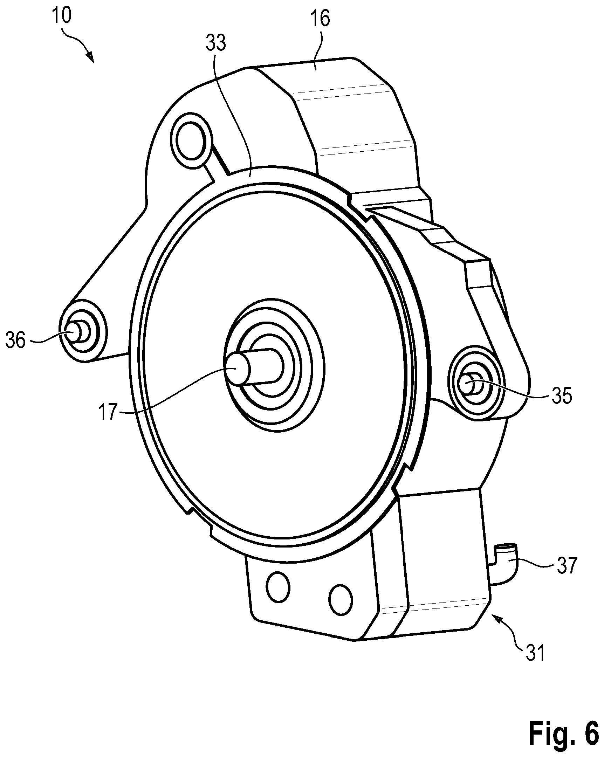

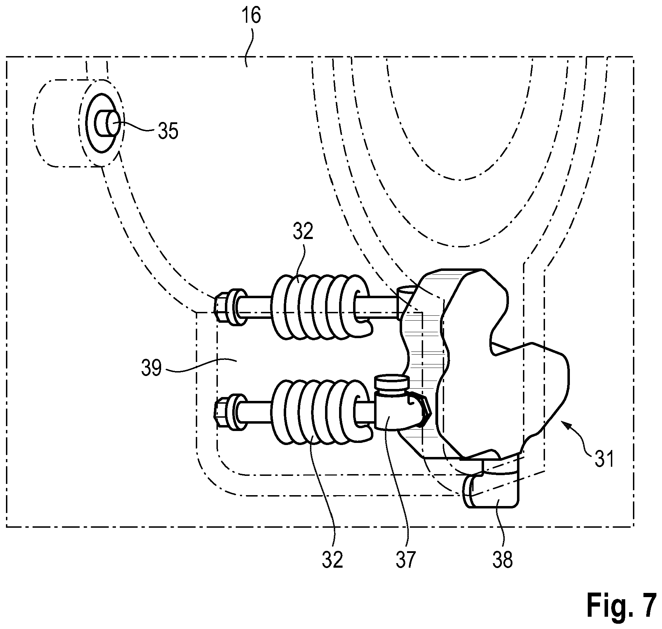

Erfindungsgemäß ist das Pumpenverteilergetriebe **10** derart an den Antriebsmotor **8** angeflanscht, dass der Antriebsmotor **8** mittels des Pumpenverteilergetriebes **10** zumindest teilweise an dem Fahrzeugrahmen **28** der Arbeitsmaschine **1** abgestützt ist. Wie sich besonders gut anhand der **Figuren 5 bis 7** ergibt, weisen zu diesem Zweck der Antriebsmotor **8** sowie das Pumpenverteilergetriebe **10** miteinander korrespondierende Ringflansche **33** auf, mittels derer beide Bauteile in Kraft übertragender Weise miteinander verbunden sind. Hierdurch wird die Abtragung von Lagerkräften ausgehend von den Antriebsmotor **8** an das Pumpenverteilergetriebe **10** sichergestellt. Letzteres ist schließlich an dem Fahrzeugrahmen **28** gelagert und zwar mittels Lagerstellen **35, 36,** mittels derer das Pumpenverteilergetriebe **10** an den Fahrzeugrahmen **28** angeschlossen ist.

Das Pumpenverteilergetriebe **10** umfasst in dem gezeigten Beispiel ein Kühlsystem **31,** mittels dessen das Pumpenverteilergetriebe **10** insgesamt kühlbar ist. Das Kühlsystem **31** ist hier in einem unteren Bereich des Gehäuses **16** des Pumpenverteilergetriebes **10** angeordnet und umfasst eine Mehrzahl von Wärmetauschern **32.** Letztere sind in Form von Rippenrohr-Wärmetauschern ausgeführt, die sich axial in einen Fluidraum **39** erstrecken, innerhalb dessen ein Betriebsfluid vorliegt. Dieses kann insbesondere von einem Schmieröl gebildet sein. Der Fluidraum **39** ist soweit mit dem Betriebsfluid gefüllt, dass zumindest ein Teil der Zahnradelemente des Pumpenverteilergetriebes **10** mit dem Betriebsfluid in Kontakt steht, wobei dieses infolge der Bewegung der Zahnradelemente fortwährend in dem Pumpenverteilergetriebe **10** verteilt wird ("Sumpf-Schmierung"). Hierdurch wird von dem Betriebsfluid neben der Schmierfunktion ferner eine Kühlfunktion ausgeübt, wobei das Betriebsfluid Abwärme von den Zahnrädern aufnimmt und - indem das Betriebsfluid durch Wirkung der Schwerkraft wieder zurück in den unten in dem Gehäuse **16** gelegenen Fluidraum **39** zurückläuft - in besagten Fluidraum **39** transportiert. Das Betriebsfluid umgibt die Wärmetauscher **32,** sodass in dem Betriebsfluid gespeicherte Wärmeenergie auf die demgegenüber kühleren Wärmetauscher **32** übergeht und hierdurch aus dem Pumpenverteilergetriebe **10** abgeführt wird.

In dem gezeigten Beispiel ist das Kühlsystem **31** des Pumpenverteilergetriebes **10** strömungstechnisch mit einem in den Figuren nicht dargestellten Kühlsystem des Antriebsmotors **8** verbunden, sodass das Kühlsystem **31** des Pumpenverteilergetriebes **10** mit demselben Kühlfluid betreibbar ist, dass auch für das Kühlsystem des Antriebsmotors **8** verwendet wird. Zwecks Zirkulation des Kühlfluids von den Wärmetauschern **32** zu dem Antriebsmotor 8 und zurück verfügt das Kühlsystem **31** über zwei Anschlussstutzen **37, 38,** von denen einer als Vorlauf und einer als Rücklauf für das Kühlfluid genutzt wird.

### Bezugszeichenliste

- 1: Arbeitsmaschine
- 2: Traktor
- 3: Vorderrad
- 4: Hinterrad
- 5: Vorderachse
- 6: Hinterachse
- 7: Getriebeeinrichtung
- 8: Antriebsmotor
- 9: Stufenloses Getriebe
- 10: Pumpenverteilergetriebe
- 11: Motorgehäuse
- 12: Abtriebswelle
- 13: Getriebegehäuse
- 14: Eingangswelle
- 15: Gelenkwelle
- 16: Gehäuse
- 17: Eingangswelle
- 18: Ausgangswelle
- 19: Torsionsdämpfer
- 20: Erste Zahnradstufe
- 20a: Erstes Zahnradelement
- 20b: Zweites Zahnradelement
- 20c: Drittes Zahnradelement
- 21: Welle
- 22: Welle
- 23: Abtriebswelle
- 24: Abtriebswelle
- 25: Hydraulische Antriebsvorrichtung
- 26: Hydraulische Antriebsvorrichtung
- 27: Zweite Zahnradstufe
- 27a: Erstes Zahnradelement
- 27b: Zweites Zahnradelement
- 28: Fahrzeugrahmen
- 29: Anschluss
- 30: Anschluss
- 31: Kühlsystem
- 32: Wärmetauscher
- 33: Ringflansch
- 34: Achsversatz
- 35: Lagerstelle
- 36: Lagerstelle
- 37: Anschlussstutzen
- 38: Anschlussstutzen
- 39: Fluidraum

## Patentansprüche

1. Landwirtschaftliche Arbeitsmaschine (1) in Form eines Traktors (2), umfassend
- einen Fahrzeugrahmen (28),
- einen Antriebsmotor (8), sowie
- eine Getriebeeinrichtung (7),
wobei der Antriebsmotor (8) ein Motorgehäuse (11) und eine Abtriebswelle (12) umfasst,
wobei die Getriebeeinrichtung (7) ein Pumpenverteilergetriebe (10) und ein stufenloses Getriebe (9) umfasst,
wobei das Pumpenverteilergetriebe (10) abtriebsseitig mindestens eine Ausgangswelle (18) zur Wirkverbindung mit dem stufenlosen Getriebe (9) und mindestens einen Anschluss (29, 30) für eine hydraulische Antriebsvorrichtung (25, 26) aufweist,
**dadurch gekennzeichnet, dass**
das Pumpenverteilergetriebe (10) derart an den Antriebsmotor (8) angeflanscht ist, dass der Antriebsmotor (8) zumindest teilweise mittels des Pumpenverteilergetriebes (10) an dem Fahrzeugrahmen (28) abgestützt ist.

2. Arbeitsmaschine (1) nach Anspruch 1, **dadurch gekennzeichnet, dass** die Getriebeeinrichtung (7) modular aufgebaut ist, wobei vorzugsweise das Pumpenverteilergetriebe (10) ein Zwischengetriebemodul bildet, das zwischen dem Antriebsmotor (8) und dem stufenlosen Getriebe (9) angeordnet ist.

3. Arbeitsmaschine (1) nach Anspruch 2, **dadurch gekennzeichnet, dass** das Pumpenverteilergetriebe (10) ein separates Gehäuse (16) aufweist, wobei vorzugsweise eine Eingangswelle (17) des Pumpenverteilergetriebes (10) mit der Abtriebswelle (12) des Antriebsmotors (8) und eine Ausgangswelle (18) des Pumpenverteilergetriebes (10) mit einer Eingangswelle (14) des stufenlosen Getriebes (9) in Wirkverbindung stehen.

4. Arbeitsmaschine (1) nach Anspruch 1 oder 2, **dadurch gekennzeichnet, dass** die Eingangswelle (17) des Pumpenverteilergetriebes (10) und die Abtriebswelle (12) des Antriebsmotors (8) und/oder die Ausgangswelle (18) des Pumpenverteilergetriebes (10) und die Eingangswelle (14) des stufenloses Getriebes (9) koaxial angeordnet sind.

5. Arbeitsmaschine (1) nach einem der Ansprüche 1 bis 4, **dadurch gekennzeichnet, dass** die Eingangswelle (17) des Pumpenverteilergetriebes (10) und die Ausgangswelle (18) des Pumpenverteilergetriebes (10) axial versetzt angeordnet sind.

6. Arbeitsmaschine (1) nach einem der vorhergehenden Ansprüche, **dadurch gekennzeichnet, dass** das Pumpenverteilergetriebe (10) ein Kühlsystem (31) umfasst.

7. Arbeitsmaschine (1) nach Anspruch 6, **dadurch gekennzeichnet, dass** mindestens ein Wärmetauscher (32) des Kühlsystems (31) des Pumpenverteilergetriebes (10) mit einem Kühlfluid eines Kühlsystems des Antriebsmotors (8) zusammenwirkt.

8. Arbeitsmaschine (1) nach Anspruch 6 oder 7, **dadurch gekennzeichnet, dass** das Kühlsystem (31) des Pumpenverteilergetriebes (10) und ein Kühlsystem des Antriebsmotors (8) strömungstechnisch miteinander verbunden sind, sodass ein Kühlfluid des Kühlsystems des Antriebsmotors (8) in das Kühlsystem (31) des Pumpenverteilergetriebes (10) zirkulierbar ist.

9. Arbeitsmaschine (1) nach einem der vorhergehenden Ansprüche, **dadurch gekennzeichnet, dass** ein Gehäuse (16) des Pumpenverteilergetriebes (10) und das Motorgehäuse (11) des Antriebsmotors (8) miteinander korrespondierende Ringflansche (33) aufweisen, mittels derer das Pumpenverteilergetriebe (10) an den Antriebsmotor (8) angeflanscht ist.

10. Arbeitsmaschine (1) nach einem der vorhergehenden Ansprüche, **dadurch gekennzeichnet, dass** das Pumpenverteilergetriebe (10) eine Übersetzungsstufe zwischen seiner Eingangswelle (17) und seiner Ausgangswelle (18) aufweist.

11. Arbeitsmaschine (1) nach einem der vorhergehenden Ansprüche, **dadurch gekennzeichnet, dass** das Pumpenverteilergetriebe (10) mit der Eingangswelle (14) des stufenlosen Getriebes (9) mittels einer Gelenkwelle (15) verbunden ist.

12. Arbeitsmaschine (1) nach einem der vorhergehenden Ansprüche, **dadurch gekennzeichnet, dass** das Pumpenverteilergetriebe (10) als Stirnradgetriebe ausgeführt ist.

13. Arbeitsmaschine (1) nach Anspruch 12, **dadurch gekennzeichnet, dass** das Pumpenverteilergetriebe (10) eine erste Zahnradstufe (20) mit einem ersten auf der Eingangswelle (17) angeordneten Zahnradelement (20a) aufweist, welches mit zumindest einem auf zumindest einer achsparallelen Welle (21, 22) angeordneten zweiten Zahnradelement (20b, 20c) kämmt.

14. Arbeitsmaschine (1) nach Anspruch 13, **dadurch gekennzeichnet, dass** die zumindest eine Welle (21, 22) eine Abtriebswelle (23, 24) des Pumpenverteilergetriebes (10) bildet, an der eine hydraulische Antriebsvorrichtung (25, 26) anschließbar ist.

15. Arbeitsmaschine (1) nach Anspruch 13 oder 14, **dadurch gekennzeichnet, dass** auf der zumindest einen Welle (21) ein erstes Zahnradelement (27a) einer zweiten Zahnradstufe (27) angeordnet ist, welches mit einem zweiten Zahnradelement (27b) der zweiten Zahnradstufe (27) kämmt, das auf der Ausgangswelle (18) des Pumpenverteilergetriebes (10) angeordnet ist.

16. Arbeitsmaschine (1) nach einem der vorhergehenden Ansprüche, **dadurch gekennzeichnet, dass** das Pumpenverteilergetriebe (10) mindestens zwei Anschlüsse (29, 30) aufweist, die jeweils zum Anschluss für einen hydraulischen Antriebsvorrichtung (25, 26) geeignet sind, wobei vorzugsweise ein erster Anschluss mit einer hydraulischen Antriebsvorrichtung (25) in Form einer Arbeitshydraulikpumpe und ein zweiter Anschluss mit hydraulischen Antriebsvorrichtung (26) in Form einer Lüfterpumpe zusammenwirkt.

17. Arbeitsmaschine (1) nach einem der vorhergehenden Ansprüche, **gekennzeichnet durch** einen Torsionsdämpfer (19), der zwischen dem Antriebsmotor (8) und dem stufenlosen Getriebe (11) angeordnet ist, wobei vorzugsweise der Torsionsdämpfer (19) unmittelbar mit der Abtriebswelle (12) des Antriebsmotors (8) zusammenwirkt.

## Claims

1. An agricultural working machine (1) in the form of a tractor (2), comprising
- a vehicle frame (28),
- a propulsion engine (8), as well as
- a transmission device (7),
wherein the propulsion engine (8) comprises an engine housing (11) and a take-off shaft (12),
wherein the transmission device (7) comprises a pump transfer gear (10) and a continuously variable transmission (9),
wherein on the take-off side, the pump transfer gear (10) has at least one output shaft (18) for operational connection to the continuously variable transmission (9) and at least one connection (29, 30) for a hydraulic drive means (25, 26),
**characterized in that**
the pump transfer gear (10) is flange-mounted on the propulsion engine (8) in a manner such that the propulsion engine (8) is at least partially supported on the vehicle frame (28) by means of the pump transfer gear (10).

2. The working machine (1) according to claim 1, **characterized in that** the transmission device (7) is modular in construction, wherein preferably, the pump transfer gear (10) forms an intermediate transmission module which is disposed between the propulsion engine (8) and the continuously variable transmission (9).

3. The working machine (1) according to claim 2, **characterized in that** the pump transfer gear (10) has a separate housing (16), wherein preferably, an input shaft (17) of the pump transfer gear (10) is operatively connected to the take-off shaft (12) of the propulsion engine (8) and an output shaft (18) of the pump transfer gear (10) is operatively connected to the input shaft (14) of the continuously variable transmission (9).

4. The working machine (1) according to claim 1 or claim 2, **characterized in that** the input shaft (17) of the pump transfer gear (10) and the take-off shaft (12) of the propulsion engine (8) and/or the output shaft (18) of the pump transfer gear (10) and the input shaft (14) of the continuously variable transmission (9) are disposed coaxially.

5. The working machine (1) according to one of claims 1 to 4, **characterized in that** the input shaft (17) of the pump transfer gear (10) and the output shaft (18) of the pump transfer gear (10) are disposed in an axially offset manner.

6. The working machine (1) according to one of the preceding claims, **characterized in that** the pump transfer gear (10) comprises a cooling system (31).

7. The working machine (1) according to claim 6, **characterized in that** at least one heat exchanger (32) of the cooling system (31) for the pump transfer gear (10) cooperates with a cooling fluid of a cooling system for the propulsion engine (8).

8. The working machine (1) according to claim 6 or claim 7, **characterized in that** the cooling system (31) for the pump transfer gear (10) and a cooling system for the propulsion engine (8) are fluidically connected together, so that a cooling fluid for the cooling system for the propulsion engine (8) can be circulated into the cooling system (31) for the pump transfer gear (10).

9. The working machine (1) according to one of the preceding claims, **characterized in that** a housing (16) of the pump transfer gear (10) and the engine housing (11) of the propulsion engine (8) have mutually corresponding annular flanges (33), by means of which the pump transfer gear (10) is flange-mounted onto the propulsion engine (8).

10. The working machine (1) according to one of the preceding claims, **characterized in that** the pump transfer gear (10) has a gear stage between its input shaft (17) and its output shaft (18).

11. The working machine (1) according to one of the preceding claims, **characterized in that** the pump transfer gear (10) is connected to the input shaft (14) of the continuously variable transmission (9) by means of a universal joint shaft (15).

12. The working machine (1) according to one of the preceding claims, **characterized in that** the pump transfer gear (10) is constructed as a spur gear.

13. The working machine (1) according to claim 12, **characterized in that** the pump transfer gear (10) has a first toothed wheel stage (20) with a first toothed wheel element (20a) disposed on the input shaft (17) which meshes with at least one second toothed wheel element (20b, 20c) disposed on at least one axially parallel shaft (21, 22).

14. The working machine (1) according to claim 13, **characterized in that** the at least one shaft (21, 22) forms a take-off shaft (23, 24) of the pump transfer gear (10), to which a hydraulic drive means (25, 26) can be connected.

15. The working machine (1) according to claim 13 or claim 14, **characterized in that** a first toothed wheel element (27a) of a second toothed wheel stage (27) is disposed on the at least one shaft (21), which first toothed wheel element meshes with a second toothed wheel element (27b) of the second toothed wheel stage (27), which is disposed on the output shaft (18) of the pump transfer gear (10).

16. The working machine (1) according to one of the preceding claims, **characterized in that** the pump transfer gear (10) has at least two connections (29, 30) which are respectively suitable as a connection for a hydraulic drive means (25, 26), wherein preferably, a first connection cooperates with a hydraulic drive means (25) in the form of an operating hydraulics pump and a second connection cooperates with a hydraulic drive means (26) in the form of a fan pump.

17. The working machine (1) according to one of the preceding claims, **characterized by** a torsional damper (19) which is disposed between the propulsion engine (8) and the continuously variable transmission (11), wherein preferably, the torsional damper (19) cooperates directly with the take-off shaft (12) of the propulsion engine (8).

## Revendications

1. Machine de travail agricole (1) sous la forme d'un tracteur (2), comprenant
- un châssis de véhicule (28),
- un moteur d'entraînement (8), et
- un dispositif de transmission (7),
le moteur d'entraînement (8) comportant un carter de moteur (11) et un arbre mené (12),
le dispositif de transmission (7) comportant un engrenage distributeur de pompe (10) et une transmission continue (9),
l'engrenage distributeur de pompe (10) présentant côté sortie au moins un arbre de sortie (18), destiné à une liaison fonctionnelle avec la transmission continue (9), et au moins un raccord (29, 30) pour un dispositif d'entraînement (25, 26) hydraulique,
**caractérisée en ce que**
l'engrenage distributeur de pompe (10) est fixé par brides au moteur d'entraînement (8) de manière à ce que le moteur d'entraînement (8) soit en appui au moins en partie sur le châssis de véhicule (28) par l'intermédiaire de l'engrenage distributeur de pompe (10).

2. Machine de travail (1) selon la revendication 1, **caractérisée en ce que** le dispositif de transmission (7) présente une structure modulaire, l'engrenage distributeur de pompe (10) constituant de préférence un module de transmission intermédiaire qui est placé entre le moteur d'entraînement (8) et la transmission continue (9).

3. Machine de travail (1) selon la revendication 2, **caractérisée en ce que** l'engrenage distributeur de pompe (10) présente un carter (16) distinct, où un arbre d'entrée (17) de l'engrenage distributeur de pompe (10) est de préférence en liaison fonctionnelle avec l'arbre mené (12) du moteur d'entraînement (8), et un arbre de sortie (18) de l'engrenage distributeur de pompe (10) avec un arbre d'entrée (14) de la transmission continue (9).

4. Machine de travail (1) selon la revendication 1 ou 2, **caractérisée en ce que** l'arbre d'entrée (17) de l'engrenage distributeur de pompe (10) et l'arbre mené (12) du moteur d'entraînement (8) et/ou l'arbre de sortie (18) de l'engrenage distributeur de pompe (10) et l'arbre d'entrée (14) de la transmission continue (9) sont disposés de manière coaxiale.

5. Machine de travail (1) selon une des revendications 1 à 4, **caractérisée en ce que** l'arbre d'entrée (17) de l'engrenage distributeur de pompe (10) et l'arbre de sortie (18) de l'engrenage distributeur de pompe (10) sont disposés en étant décalés axialement.

6. Machine de travail (1) selon une des revendications précédentes, **caractérisée en ce que** l'engrenage distributeur de pompe (10) comprend un système de refroidissement (31).

7. Machine de travail (1) selon la revendication 6, **caractérisée en ce qu'**au moins un échangeur de chaleur (32) du système de refroidissement (31) de l'engrenage distributeur de pompe (10) coopère avec un fluide réfrigérant d'un système de refroidissement du moteur d'entraînement (8).

8. Machine de travail (1) selon la revendication 6 ou 7, **caractérisée en ce que** le système de refroidissement (31) de l'engrenage distributeur de pompe (10) et un système de refroidissement du moteur d'entraînement (8) sont reliés entre eux du point de vue de l'écoulement, de sorte qu'un fluide réfrigérant du système de refroidissement du moteur d'entraînement (8) peut être mis en circulation dans le système de refroidissement (31) de l'engrenage distributeur de pompe (10).

9. Machine de travail (1) selon une des revendications précédentes, **caractérisée en ce qu'**un carter (16) de l'engrenage distributeur de pompe (10) et le carter de moteur (11) du moteur d'entraînement (8) présentent des brides annulaires (33) qui se correspondent entre elles et à l'aide desquelles l'engrenage distributeur de pompe (10) est bridé sur le moteur d'entraînement (8).

10. Machine de travail (1) selon une des revendications précédentes, **caractérisée en ce que** l'engrenage distributeur de pompe (10) présente un étage de multiplication entre son arbre d'entrée (17) et son arbre de sortie (18).

11. Machine de travail (1) selon une des revendications précédentes, **caractérisée en ce que** l'engrenage distributeur de pompe (10) est reliée à l'arbre d'entrée (14) de la transmission continue (9), par l'intermédiaire d'un arbre articulé (15).

12. Machine de travail (1) selon une des revendications précédentes, **caractérisée en ce que** l'engrenage distributeur de pompe (10) est réalisé sous forme d'engrenage droit.

13. Machine de travail (1) selon la revendication 12, **caractérisée en ce que** l'engrenage distributeur de pompe (10) présente un premier étage d'engrenages (20) avec un premier élément de roue dentée (20a) qui est disposé sur l'arbre d'entrée (17) et engrène avec au moins un deuxième élément de roue dentée (20b, 20c) disposé sur au moins un arbre (21, 22) à axe parallèle.

14. Machine de travail (1) selon la revendication 13, **caractérisée en ce que** l'arbre (21, 22), au nombre d'au moins un, constitue un arbre mené (23, 24) de l'engrenage distributeur de pompe (10), auquel peut être raccordé un dispositif d'entraînement (25, 26) hydraulique.

15. Machine de travail (1) selon la revendication 13 ou 14, **caractérisée en ce qu'**il est prévu sur l'arbre (21), au nombre d'au moins un, un premier élément de roue dentée (27a) d'un deuxième étage de roues dentées (27), qui engrène avec un deuxième élément de roue dentée (27b) du deuxième étage de roues dentées (27), qui est disposé sur l'arbre de sortie (18) de l'engrenage distributeur de pompe (10).

16. Machine de travail (1) selon une des revendications précédentes, **caractérisée en ce que** l'engrenage distributeur de pompe (10) présente au moins deux raccords (29, 30) qui conviennent respectivement au raccordement d'un dispositif d'entraînement (25, 26) hydraulique, sachant que, de préférence, un premier raccord coopère avec un dispositif d'entraînement (25) hydraulique sous la forme d'une pompe de travail hydraulique, et un deuxième raccord coopère avec un dispositif d'entraînement (26) hydraulique sous la forme d'une pompe à ventilateur.

17. Machine de travail (1) selon une des revendications précédentes, **caractérisée en ce qu'**elle présente un amortisseur de torsion (19) qui est disposé entre le moteur d'entraînement (8) et la transmission (11) continue, l'amortisseur de torsion (19) coopérant de préférence directement avec l'arbre dmené (12) du moteur d'entraînement (8).
